# NEUE EUROPÄISCHE PATENTSCHRIFT

(11) **EP 0 470 468 B2**
(45) Veröffentlichungstag und Bekanntmachung des Hinweises auf die Entscheidung über den Einspruch: **19.03.1997**
(45) Hinweis auf die Patenterteilung: 29.06.1994
(21) Anmeldenummer: 91112644.9
(22) Anmeldetag: 27.07.1991
(51) Int. Cl.: B01D 53/00

(54) **Verfahren zur biologischen Reinigung von Abluftströmen**
Process for the biological cleaning of exhaust air
Procédé de nettoyage biologique d'air d'échappement

(30) Priorität: 10.08.1990 DE 4025343
(43) Veröffentlichungstag der Anmeldung: 12.02.1992
(73) Patentinhaber: BAYER AG, 51368 Leverkusen (DE)
(72) Erfinder: Wolff, Felix, Dipl.-Ing., W-5000 Köln 1 (DE); Melin, Thomas, Dr., W-5000 Köln 80 (DE)

(56) Entgegenhaltungen:
- EP-A- 0 094 573
- EP-A- 0 100 024
- EP-A- 0 133 222
- EP-A- 0 224 889
- Journal WPCF, 54 (1982), Seiten 1541 - 1545
- Chem.-Ing.-Tech., 56 (1984), Seiten 279 - 286

## Beschreibung

Die Erfindung bezieht sich auf ein Verfahren zur biologischen Elimination von halogen- oder schwefelhaltigen gasförmigen Schadstoffen aus einem Abluftstrom, bei dem der Abluftstrom durch einen mittels Sprühdüsen befeuchteten Tropfkörper geleitet wird; der intermittierend befeuchtet wird.

Aus der Literatur ist das Biowäscherverfahren bekannt, bei dem die organische Verunreinigung in einem Absorber aus dem Abluftstrom ausgewaschen und die Waschflüssigkeit in einem Belebtschlammbecken biologisch gereinigt wird. Die gereinigte Flüssigkeit wird dann in den Absorber rezirkuliert und erneut beladen. Die Aufnahmefähigkeit der Flüssigkeit ist jedoch bei den oben genannten Substanzen so gering, daß der Umpumpstrom zwischen den beiden Apparaten so groß wird, daß das Verfahren aus wirtschaftlichen Gründen nicht einsetzbar ist.

Durch das Patent EP-A-0 249 861 ist ein Verfahren veröffentlicht, bei dem der Absorber und der Belebtschlammreaktor in einem Apparat, einer Bodenkolonne, integriert worden sind. Gegenüber dem Sprüh- oder Strahlwäscher ist der Anwendungsbereich deutlich erweitert worden. Da jedoch die erforderliche Stufenzahl und damit der Druckverlust mit abnehmender Wasserlöslichkeit der Abluftinhaltsstoffe sinkt, sind auch diesem Verfahren Grenzen gesetzt.

Bei einem weiteren Biowäscherverfahren (DE-A-3 641 442), bei dem der Waschflüssigkeit Silikonöl zugesetzt wird, damit die Flüssigkeit mehr organische Substanzen absorbieren kann, erweist sich die Ausschleusung der entstehenden Salze als problematisch. Mit dem Salz wird auch immer Silikonöl ausgetragen, das ersetzt werden muß.

Das Biofilterverfahren ist für die Elimination von Substanzen, bei deren Abbau HCl oder H₂SO₄ entsteht, ungeeignet, da der Biofilm versäuert, wodurch die Abbauaktivität der Mikroorganismen zum Erliegen kommt.

In der VDI-Richtlinie 3478 wird noch das Tropfkörperverfahren erwähnt. Im Gegensatz zu dem Biowäscherverfahren sind bei dem Tropfkörperverfahren die Mikroorganismen immobilisiert. Das Gas wird durch eine Packung geleitet, in der der Stoffübergang der Organika und des Sauerstoffs stattfindet. Zusätzlich wird ein Flüssigkeitsstrom über der Packung verteilt, mit dem die H⁺-Ionen neutralisiert, das anfallende Salz abtransportiert und die Bakterien mit Nährsalzen versorgt werden. Durch die Immobilisierung der Mikroorganismen ist eine Salzausschleusung ohne Bakterienverlust gewährleistet. Der Tropfkörper wurde bisher hauptsächlich zur Geruchselimination eingesetzt.

Ein Tropfkörperverfahren zur biologischen Abluftreinigung ist auch aus EP-A-224 889 bekannt. Bei diesem Verfahren kann eine Wasch- oder Spülflüssigkeit kontinuierlich oder intermittierend über das Rieselbett bzw. den Tropfkörper geleitet werden. Der Wasch- bzw. Spülflüssigkeit können Nährstoffe, Spurenelemente und gegebenenfalls andere Hilfsstoffe zudosiert werden.

Die Neutralisation der beim Abbau von S- und Cl-Verbindungen entstehenden Säuren ist wegen des begrenzten pH-Bereichs, in dem Mikroorganismen lebensfähig sind und der ungleichmaßigen Durchströmung von Schüttungen, schwierig. Wenn man zu wenig Flüssigkeit über die Schüttung verteilt, versäuert der Biofilm und die Abbauaktivität der Organismen wird reduziert. Ist die Berieselungsdichte jedoch zu hoch, dann verstopft die Flüssigkeit bevorzugt Kanäle, in denen viel Biomasse sitzt. Diese Organismen nehmen dann nicht mehr an der Elimination der Abluftinhaltsstoffe teil und die Abbauleistung sinkt.

Der Erfindung liegt die Aufgage zugrunde, dafür zu sorgen, daß weder der pH-Wert im Biofilm zu stark absinkt noch der Flüssigkeitsstrom die Kanäle des Tropfkörpers verstopft.

Diese Aufgabe wird ausgehend von einem Verfahren, bei dem der Abluftstrom durch einen mittels Sprühdüsen intermittierend befeuchteten Tropfkörper geleitet wird, erfindungsgemäß dadurch gelöst, daß ein in Teilabschnitte unterteilter Tropfkörper verwendet wird, die derart zyklisch befeuchtet werden, daß die den Oberflächen der Teilabschnitte zugordneten Sprühdüsen phasenverschoben intermittierend beaufschlagt werden. Vorzugsweise wird der Tropfkörper 2- bis 10-mal pro Stunde während einer Dauer von 20 s bis 3 min mit einer Flüssigkeit besprüht.

Gemäß einer Weiterentwicklung des erfindungsgemäßen Verfahrens wird die Frequenz der Befeuchtungszyklen in Abhängigkeit des pH-Wertes der aus dem Tropfkörper ablaufenden Lösung geregelt. In diesem Fall stellt sich also in Abhängigkeit des pH-Wertes eine optimale Befeuchtungsfrequenz ein.

Ferner können auch mehrere Tropfkörpereinheiten hintereinander oder parallel geschaltet werden, die phasenverschoben intermittierend befeuchtet werden.

Mit dem erfindungsgemäßen Verfahren werden folgende Vorteile erzielt:
- Bei der Elimination von halogen- oder schwefelhaltigen gasförmigen Schadstoffen aus einem Abluftstrom kann die Raum-Zeit-Ausbeute, verglichen mit bisherigen Verfahren, um das 3- bis 4-fache gesteigert werden. Bei großen Gasvolumenströmen, wie sie z.B. bei Raumabsaugungen anfallen, ergibt sich dadurch eine erhebliche Kosten- und Platzersparnis.
- Die zusätzlichen Investitionskosten gegenüber der herkömmlichen biologischen Abluftreinigung sind relativ niedrig. Das erfindungsgemäße Verfahren kann auch bei bereits vorhandenen Anlagen mit relativ geringem zusätzlichen apparativen Aufwand realisiert werden.
- Die phasenverschobene Befeuchtung von Teilflächen hat den Vorteil, daß sich die Verschlechterung der Eliminationsleistung in dem Teilbereich, der gerade besprüht wird, nicht signifikant auf die Eliminationsleistung des gesamten Apparates auswirkt.

Im folgenden wird die Erfindung anhand von Ausführungsbeispielen und Zeichnungen näher erläutert. Es zeigen:
- Fig. 1: einen Tropfkörperturm zur Durchführung des erfindungsgemäßen Verfahrens
- Fig. 2: ein Verfahrensschema mit geregeltem Befeuchtungszyklus
- Fig. 3: einen Querschnitt durch einen Tropfkörper mit kreisförmig besprühten Teilabschnitten
- Fig. 4: ein Diagramm zur Erläuterung der phasenverschobenen intermittierenden Befeuchtung der in Fig. 3 dargestellten Tropfkörperabschnitte und
- Fig. 5: einen Tropfkörperturm mit parallel geschalteten Einheiten.

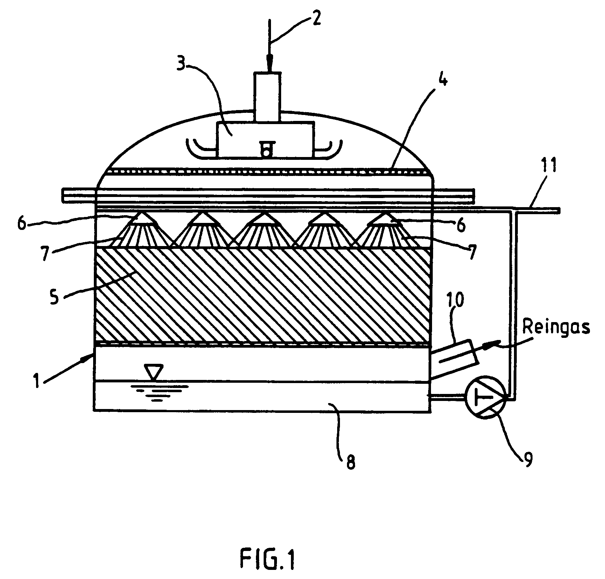

Bei dem Tropfkörperturm 1 in Fig. 1 wird das zu reinigende Rohgas 2 am oberen Ende zugeführt und durch einen Gasverteiler 3 gleichmäßig über den Querschnitt verteilt. Unterhalb des Gasverteilers 3 ist eine Lochplatte 4 zur weiteren Vergleichmäßigung angeordnet. Das Kernstück des Tropfkörperturmes 1 ist der Tropfkörper 5, der aus retikuliertem Polyurethanschaum mit einer spezifischen Oberfläche von 500 m²/m³ besteht. Die für die Abluftreinigung erforderlichen Mikroorganismen sind auf dem Schaum immobilisiert. Der Tropfkörper 5 wird durch eine Reihe von parallel geschalteten Sprühdüsen 6 befeuchtet (Sprühkegel 7). Die Flüssigkeit rieselt dann durch den Tropfkörper 5 hindurch und sammelt sich im Sumpf 8 am Boden des Tropfkörperturmes 1. Die im Sumpf 8 befindliche Flüssigkeit wird durch eine Pumpe 9 zu den Sprühdüsen 6 rezirkuliert. Das gereinigte Gas tritt durch den Stutzen 10 aus. Durch den Anschluß 11 am Flüssigkeitskreislauf kann frische Flüssigkeit bzw. eine Nährsalzlösung zugeführt werden.

Die Pumpe 9 läuft nicht kontinuierlich durch, sondern wird von einem taktgesteuerten Motor intermittierend betrieben. Die Taktzeit der Befeuchtung und die Frequenz der Sprühzyklen hängt dabei von der Art und der Stärke der Gasbeladung ab. Gute Abscheideergebnisse werden erfahrungsgemäß erzielt, wenn der Tropfkörper 1- bis 5-mal pro Stunde (Frequenz) während einer Dauer von 20 s bis 3 min (Taktzeit) mit Flüssigkeit besprüht wird.

Bei Substanzen, bei denen beim biologischen Abbau Säure entsteht, wird die Zeit zwischen zwei Sprühzyklen und damit die Sprühfrequenz vom Grad der Versäuerung bestimmt. Bei anderen Substanzen, z.B. Toluol oder Aceton, muß eine Besprühung erfolgen, wenn die Mikroorganismen nicht mehr ausreichend mit Nährstoffen versorgt sind.

Folgende stoffspezifischen optimalen Sprühzyklen wurden empirisch ermittelt:

| Substanz | Beladung [mg/m³] | Taktzeit | Frequenz |
|---|---|---|---|
| Methylenchlorid | < 400 | 2 min | 3-mal/h |
| " | > 400 | 2 min | 4-mal/h |
| Toluol | <1000 | 30 s | 2-mal/h |
| " | >1000 | 30 s | 2-mal/h |
| Aceton wie Toluol | | | |

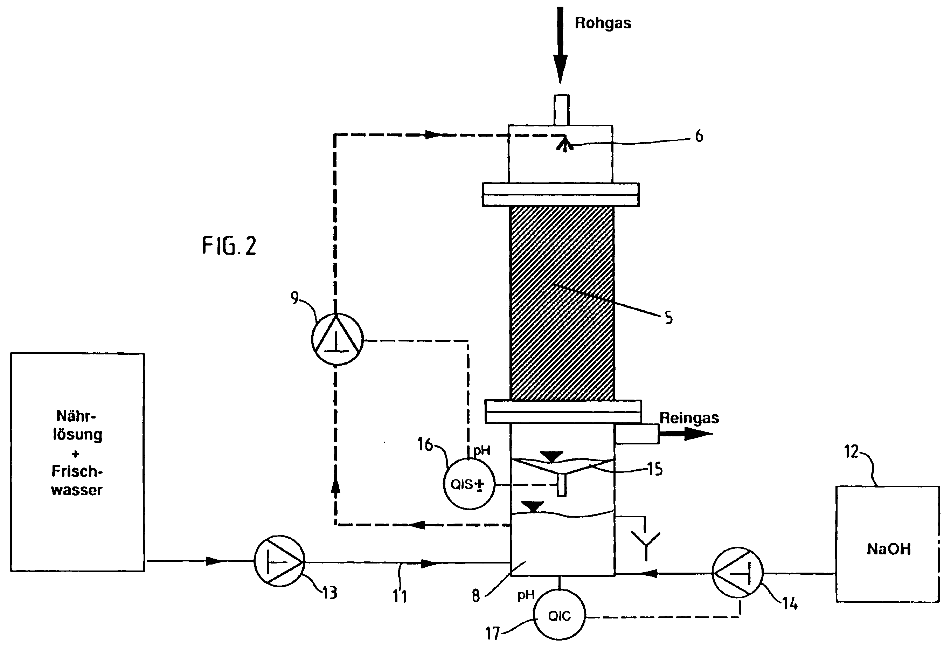

Bei chlorierten Kohlenwasserstoffen oder bei Substanzen, bei deren Abbau H⁺- oder OH⁻-Ionen frei werden, ist eine Regelung der Befeuchtungsfrequenz über den pH-Wert von Vorteil. Ein Verfahrensschema für eine solche Regelung ist in Fig. 2 dargestellt. Als Sprühflüssigkeit wird eine mit Natronlauge gepufferte Nährsalzlösung verwendet. Die Nährlösung wird in einem Tank 11 und die Natronlauge in einem Tank 12 vorrätig gehalten. Die Nährlösung wird dem Kolonnensumpf mittels der Pumpe 13 zugegeben. Das Meßsignal einer pH-Meßstelle am Kolonnensumpf wird einem Regler 17 zugeführt. Der Regler 17 steuert die Pumpe 14 so an, daß im Kolonnensumpf ein konstanter pH-Wert herrscht.

Die Kreislaufpumpe 9 fördert, wie schon anhand von Fig. 1 erläutert, die Flüssigkeit aus dem Sumpf 8 zu den Sprühdüsen 6. Am Tropfkörperablauf 15 befindet sich eine weitere pH-Wert-Meßstelle. Das pH-Wert-Meßsignal wird einem Regler 16 zugeführt, der die Pumpe in der Weise steuert, daß eine erneute Sprühphase dann eingeleitet wird, wenn der pH-Wert der vom Tropfkörper 5 ablaufenden Flüssigkeit einen vorgegebenen Wert unterschreitet. Der Regelkreis bewirkt in diesem Fall, daß eine selbsttätige Einstellung der Befeuchtungsfrequenz und gegebenenfalls auch der Taktzeit erfolgt.

Unabhängig von der beschriebenen Regelung über den pH-Wert kann die Frequenz für die Sprühzyklen auch über die Werte des Gesamtkohlenstoffgehalts des aus der Anlage austretenden Abgases (10) geregelt werden. Der Gesamtkohlenstoffgehalt kann mit einem Flammenionisationsdetektor (FID) gemessen werden. Die Regelung arbeitet zweckmäßig in der Weise, daß die Sprühfrequenz erhöht wird, wenn die Eliminationsleistung (Differenz zwischen Ein- und Ausgang) einen vorgegebenen Wert unterschreitet.

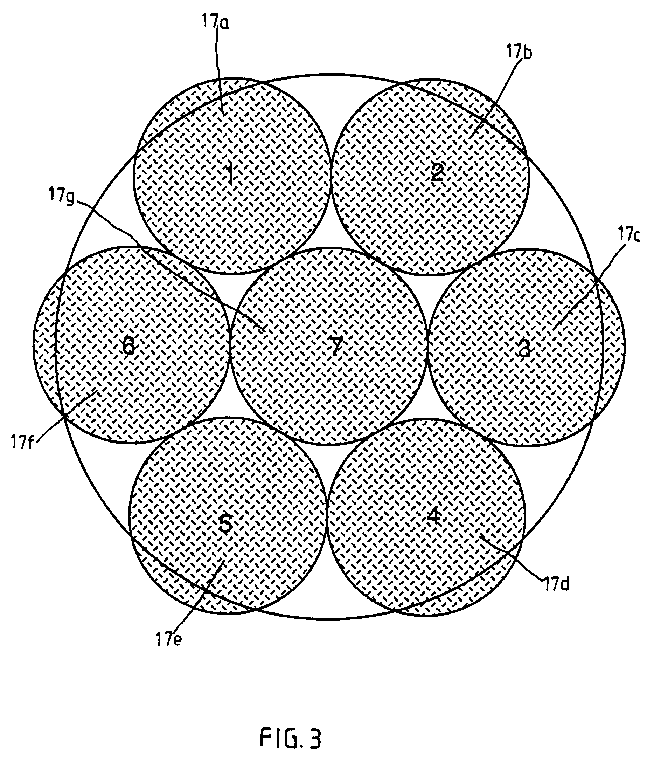

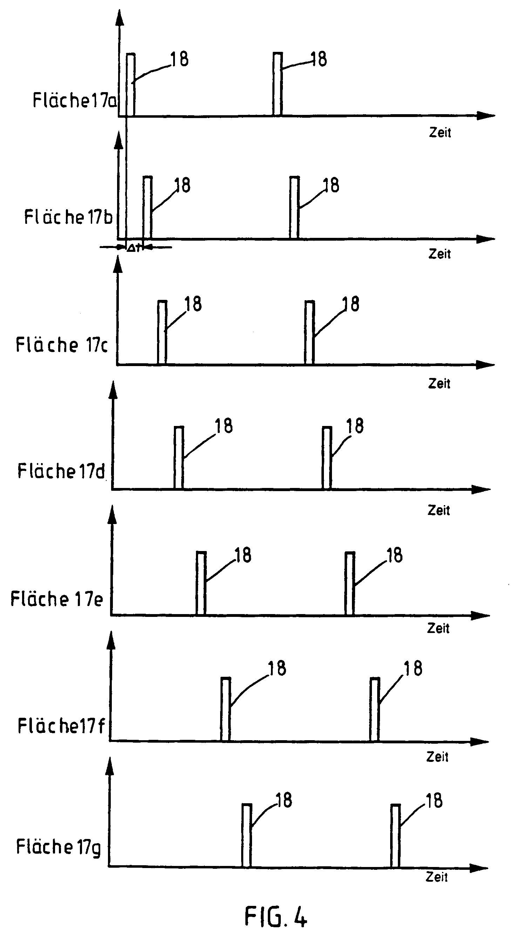

Das Verfahren wird anhand der Fig. 3 und 4 beschrieben. In Fig. 3 sind schematisch die den Sprühkegeln 7 der Sprühdüsen 6 zugeordneten befeuchteten Kreisflächen 17a bis 17g auf der Tropfkörperoberfläche dargestellt. Die Flächen 17a bis 17g werden nun nicht im Gleichtakt besprüht, sondern phasenverschoben. Diese phasenverschobene intermittierende Befeuchtung läßt sich anhand von Fig. 4 verstehen. Die sieben verschiedenen Teildiagramme sind in Teilabschnitten 17a bis 17g auf der Tropfkörperoberfläche zugeordnet. Als Abszisse ist die Zeit und als Ordinate der Flüssigkeitsvolumenstrom durch die den Kreisflächen 17a bis 17g zugeordneten Sprühdüsen 6 aufgetragen. Die Rechteckimpulse 18 entsprechen jeweils einem Sprühzyklus. Entsprechend der Darstellung in Fig. 4 beträgt die Phasenverschiebung bei der Befeuchtung der Fläche 17b gegenüber der Fläche 17a Δt Bei der Fläche 17c erfolgt die Befeuchtung zu einem Zeitpunkt, der gegenüber der Fläche 17a um 2ΔT bei der Fläche 17c um 3ΔT usw. verschoben ist. Auf diese Weise ergibt sich eine Art umlaufende (zyklische) Beleuchtung der Tropfkörperabschnitte.

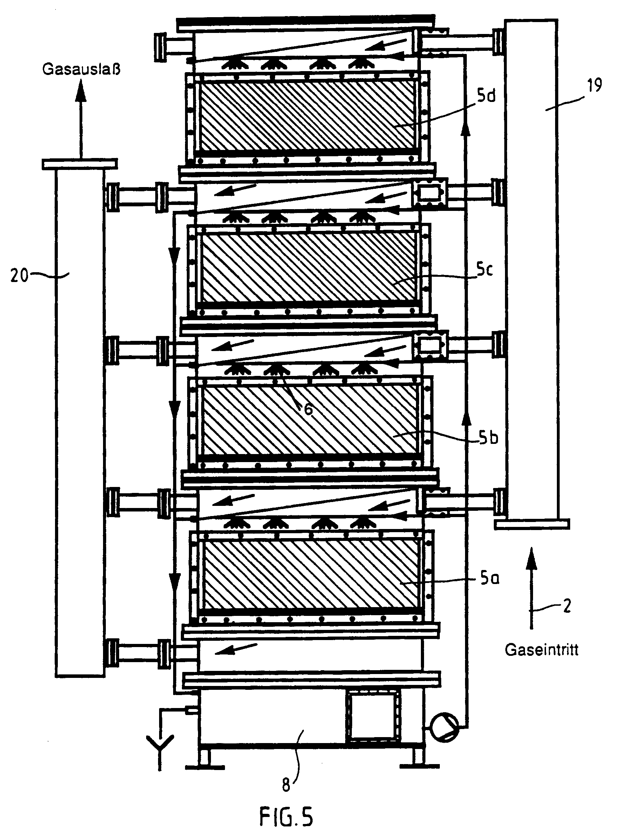

Eine weitere Ausführung eines Tropfkörperturmes, die sich im Zusammenhang mit dem erfindungsgemäßen Verfahren bewährt hat, ist in Fig. 5 dargestellt. Der Tropfkörper 5 besteht hier nicht aus einem, sondern aus mehreren Blöcken 5a, 5b, 5c, 5d, die parallel geschaltet sind. Der zu reinigende Abluftstrom wird mittels des Rohrverteilers 19 auf die einzelnen Abschnitte 5a bis 5d aufgeteilt. Die jeweils am unteren Ende austretenden gereinigten Teilströme werden dann im Sammelrohr 20 vereinigt und abgeführt. Auch bei dieser Ausführung kann vorteilhaft mit einer phasenverschobenen Befeuchtung der einzelnen Tropfkörperabschnitte gearbeitet werden. Zu diesem Zweck sind die Tropfkörperabschnitte 5a bis 5d mit getrennten Flüssigkeitszuläufen und -abläufen versehen. Am- Boden des Tropfkörperturmes befindet sich ein gemeinsamer Sumpf 8. Es ist auch denkbar, die beiden Ausführungsformen nach Fig. 5 und Fig. 3 miteinander zu kombinieren, so daß sowohl in Horizontal- als auch in Vertikalrichtung eine intermittierend phasenverschobene Befeuchtung erfolgt.

## Patentansprüche

1. Verfahren zur biologischen Elimination von halogen- oder schwefelhaltigen gasförmigen Schadstoffen aus einem Abluftstrom (2) bei dem der Abluftstrom (2) durch einen mittels Sprühdüsen (6) befeuchteten Tropfkörper (5) geleitet wird, und der Tropfkörper (5) intermittierend befeuchtet wird, dadurch gekennzeichnet, daß ein in Teilabschnitte unterteilter Tropfkörper verwendet wird, die derart zyklisch befeuchtet werden, daß die den Oberflächen der Teilabschnitte zugordneten Sprühdüsen phasenverschoben intermittierend beaufschlagt werden.

2. Verfahren nach Anspruch 1, dadurch gekennzeichnet, daß der Tropfkörper (5) 2- bis 10-mal pro Stunde während einer Dauer von 20 s bis 3 min mit einer Flüssigkeit besprüht wird.

3. Verfahren nach Anspruch 1 bis 2, dadurch gekennzeichnet, daß die Frequenz der Befeuchtungszyklen in Abhängigkeit des pH-Wertes der aus dem Tropfkörper (5) ablaufenden Lösung geregelt wird.

4. Verfahren nach Anspruch 1 bis 2, dadurch gekennzeichnet, daß die Frequenz der Befeuchtungszyklen in Abhängigkeit des Gesamtkohlenstoffgehaltes des aus dem Tropfkörper (5) abströmenden Gases geregelt wird.

5. Verfahren nach Anspruch 1 bis 4, dadurch gekennzeichnet, daß mehrere Tropfkörper-Einheitern (5) hintereinander oder parallel geschaltet werden, die phasenverschoben intermittierend befeuchtet werden.

## Claims

1. A process for the biological elimination of halogen- or sulphur-containing gaseous pollutants from a stream of waste air (2), wherein the stream of waste air (2) is passed through a trickling filter (5) moistened by means of spray nozzles (6), and the trickling filter (5) is moistened intermittently, characterised in that a trickling filter subdivided into sections is used, the sections are moistened in cyclically in such a way that the spray nozzles allocated to the surfaces of the sections are activated intermittently and out of phase.

2. A process according to claim 1, characterised in that the trickling filter (5) is sprayed with a liquid for a period of 20 s to 30 min two to ten times per hour.

3. A process according to claim 1 and 2, characterised in that the frequency of the moistening cycles is regulated depending on the pH value of the solution flowing out of the trickling filter (5).

4. A process according to claim 1 and 2, characterised in that the frequency of the moistening cycles is regulated depending on the total carbon content of the gas flowing out of the trickling filter (5).

5. A process according to claims 1 to 4, characterised in that several trickling filter units (5) subjected to intermittent phase-displaced moistening are connected behind one another or in parallel.

## Revendications

1. Procédé pour l'élimination biologique de substances nocives gazeuses halogénées ou soufrées d'un courant d'air usé (2), dans lequel le courant d'air usé (2) est amené à traverser un lit percolateur (5) humidifié au moyen de pulvérisateurs (6), et le lit percolateur (5) est humidifié par intermittence, caractérisé en ce que l'on utilise un lit percolateur divisé en segments partiels qui sont humidifiés de façon cyclique de telle manière que les pulvérisateurs associés aux surfaces des segments partiels sont sollicités par intermittence et de manière déphasée.

2. Procédé selon la revendication 1, caractérisé en ce que le lit percolateur (5) est aspergé avec un liquide 2 à 10 fois par heure pendant une durée de 20 s à 3 minutes.

3. Procédé selon les revendications 1 et 2, caractérisé en ce que la fréquence des cycles d'humidification est régulée en fonction du pH de la solution qui s'écoule du lit percolateur (5).

4. Procédé selon les revendications 1 et 2, caractérisé en ce que la fréquence des cycles d'humidification est régulée en fonction de la teneur totale en carbone du gaz qui sort du lit percolateur (5).

5. Procédé selon les revendications 1 à 4, caractérisé en ce que plusieurs unités de lit percolateur (5) qui sont humidifiées par intermittence et de manière déphasée sont branchées en série ou en parallèle.
